# FASCICULE DE BREVET EUROPEEN

(11) **EP 1 066 476 B1**
(45) Date de publication et mention de la délivrance du brevet: **02.01.2003**
(21) Numéro de dépôt: 00900672.7
(22) Date de dépôt: 27.01.2000
(51) Int. Cl.: F16D 25/08

(54) **DISPOSITIF DE DEBRAYAGE A COMMANDE HYDRAULIQUE**
HYDRAULISCHE KUPPLUNGSSTEUEREINRICHTUNG
HYDRAULICALLY CONTROLLED CLUTCH RELEASE DEVICE

(30) Priorité: 29.01.1999 FR 9901007
(43) Date de publication de la demande: 10.01.2001
(73) Titulaire: VALEO EMBRAYAGES, 80009 Amiens Cedex 1 (FR)
(72) Inventeur: THOMIRE, Sylvain, F-92300 Levallois (FR)
(74) Mandataire: Gamonal, Didier
(86) Numéro de dépôt international: FR0000186
(87) Numéro de publication internationale: WO00045061

(56) Documents cités:
- DE-A- 3 414 648
- DE-A- 4 331 728
- US-A- 4 557 506

## Description

La présente invention concerne un dispositif de débrayage pour embrayage, notamment pour embrayage mécanique à diaphragme de véhicule automobile.

L'invention concerne plus particulièrement un dispositif de débrayage pour action sur un dispositif débrayeur, notamment pour embrayage mécanique de véhicule automobile, comportant un corps extérieur pour fixation du dispositif de débrayage sur une partie fixe, une cavité borgne de forme annulaire, d'orientation axiale, définie par un tube de guidage délimité radialement vers l'extérieur par un tube externe, dont le corps extérieur épouse la forme, et comportant un piston pénétrant dans la cavité borgne pour définir une chambre de commande à volume variable, et du type dans lequel le tube externe comporte un orifice d'alimentation en fluide de la chambre qui est relié à une conduite d'alimentation qui communique avec un alésage du corps extérieur, d'orientation globalement radiale et formé en regard de l'orifice d'alimentation du tube externe, à travers un élément tubulaire rapporté d'étanchéité monté dans l'alésage.

Un tel dispositif de débrayage à commande hydraulique par l'intermédiaire du piston est décrit et représenté dans la demande de brevet français n°98.07970 déposée le 19 juin 1998 (voir aussi: WO 99/66226 publié 23/12/99) ainsi qu'à la figure 1 annexée à la présente description.

Dans ce document, afin d'assurer une bonne étanchéité entre le corps extérieur et le tube externe autour de l'orifice d'alimentation en fluide de la chambre, l'élément tubulaire d'étanchéité est interposé axialement dans l'alésage entre le tube externe, avec interposition d'un joint d'étanchéité, et l'extrémité d'une conduite de raccordement elle-même raccordée de manière étanche sur le corps extérieur.

L'invention a pour but de proposer un dispositif de débrayage du type sus-indiqué dans lequel les différents moyens d'étanchéité sont plus efficaces et dont la conception permette une plus grande modularité des composants notamment en vue de disposer, à coût réduit, d'une gamme de dispositifs de débrayage à commande hydraulique facilitant notamment la disposition géométrique de la conduite de raccordement par rapport au corps extérieur.

Dans ce but, l'invention propose un dispositif caractérisé en ce que l'extrémité radialement extérieure de l'élément tubulaire d'étanchéité est borgne, et en ce que la conduite d'alimentation est reliée à un perçage du corps extérieur qui débouche transversalement dans l'alésage au droit d'un passage formé dans la paroi de l'élément tubulaire d'étanchéité.

Grâce à une telle caractéristique, la maîtrise des étanchéités entre le corps extérieur et le tube externe d'une part, et entre la conduite d'alimentation et le corps extérieur, d'autre part, est simplifiée et indépendante tout en permettant la disposition et l'orientation de la conduite d'alimentation et de son perçage de raccordement, indépendamment de l'orientation et de la position de l'alésage et de l'élément tubulaire rapporté d'étanchéité.

De plus l'élément tubulaire d'étanchéité se présente sous la forme d'une "cartouche" d'étanchéité dont les conditions de réalisation et de montage étanche sont améliorées.

Selon d'autres caractéristiques de l'invention :
- l'élément tubulaire d'étanchéité porte au moins un joint annulaire d'étanchéité qui coopère avec la paroi de l'alésage ;
- le joint annulaire d'étanchéité est disposé entre ledit passage et l'extrémité radialement intérieure de l'élément tubulaire d'étanchéité, assurant ainsi une étanchéité complémentaire entre la chambre et le corps extérieur ;
- l'élément tubulaire d'étanchéité porte un second joint annulaire d'étanchéité disposé entre ledit passage et l'extrémité radialement extérieure de l'élément tubulaire d'étanchéité, complétant l'étanchéité entre la cartouche d'étanchéité et l'alésage dans lequel elle est montée de manière étanche ;
- une garniture annulaire d'étanchéité est montée comprimée entre la face transversale annulaire d'extrémité radialement intérieure de l'élément tubulaire d'étanchéité et une partie en vis-à-vis de la paroi extérieure du tube externe qui entoure l'orifice pour assurer l'étanchéité autour de l'orifice d'alimentation et éviter des fuites de liquide entre le tube externe et le corps extérieur ;
- la garniture annulaire d'étanchéité est un élément rapporté entre la face transversale annulaire d'extrémité radialement intérieure de l'élément tubulaire d'étanchéité et la partie en vis-à-vis de la paroi extérieure du tube externe ou, en variante, la garniture annulaire d'étanchéité est réalisée par moulage en une seule pièce avec l'élément tubulaire d'étanchéité, notamment par injection bi-matières ;
- le passage est au moins un trou formé dans la paroi de l'élément tubulaire d'étanchéité pour mettre en communication l'intérieur de la cartouche tubulaire d'étanchéité avec sa périphérie ou paroi externe ;
- l'élément tubulaire d'étanchéité comporte une gorge radiale interne dans laquelle débouche ledit trou en permettant ainsi différentes orientations et positionnement du perçage de raccordement en utilisant une même cartouche et en rendant indifférente l'orientation angulaire de la cartouche dans son alésage ;
- l'élément tubulaire d'étanchéité est immobilisé axialement dans l'alésage qui le reçoit par des moyens de fixation agencés à l'extrémité radialement extérieure de l'alésage, pour le retenir axialement dans l'alésage en comprimant axialement la garniture annulaire d'étanchéité et en réalisant. le cas échéant une étanchéité supplémentaire au niveau des moyens de fixation ;
- les moyens de fixation comportent un épaulement de butée radialement interne de l'alésage qui s'étend en regard de la face transversale annulaire d'extrémité axiale radialement extérieure de l'élément tubulaire d'étanchéité ;
- l'épaulement est réalisé venu de matière avec le corps, notamment par déformation de celui-ci après la mise en place de l'élément tubulaire d'étanchéité ;
- l'épaulement de butée est un anneau rapporté à l'intérieur de l'alésage ;
- l'élément tubulaire d'étanchéité est immobilisé axialement dans l'alésage qui le reçoit par soudage étanche, notamment avec apport extérieur de chaleur, de son tronçon d'extrémité radialement extérieure dans la partie correspondante de l'alésage ;
- l'élément tubulaire d'étanchéité est immobilisé axialement dans l'alésage qui le reçoit par collage étanche de son tronçon d'extrémité radialement extérieure dans la partie correspondante de l'alésage ;
- l'élément tubulaire d'étanchéité est immobilisé axialement dans l'alésage qui le reçoit par vissage de son tronçon d'extrémité radialement extérieure dans la partie correspondante de l'alésage ;
- l'élément tubulaire d'étanchéité est immobilisé axialement dans l'alésage qui le reçoit par emmanchement à force ;
- l'élément tubulaire d'étanchéité est immobilisé axialement dans l'alésage qui le reçoit par des moyens complémentaires de fixation par emboîtement élastique ;
- l'élément tubulaire d'étanchéité est immobilisé axialement dans l'alésage qui le reçoit par des moyens complémentaires de fixation formant goupille ;
- le corps est une pièce moulée en matière plastique ;
- le tube externe est un tube métallique ;
- l'élément tubulaire d'étanchéité est une pièce moulée en matière plastique.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle en section axiale longitudinale d'un dispositif de débrayage à commande hydraulique selon l'état de la technique qui est illustré en position désengagée de l'embrayage ;
- la figure 2 est une vue similaire à celle de la figure 1 sur laquelle on a représenté un premier mode de réalisation d'un dispositif conforme aux enseignements de l'invention avec sa cartouche d'étanchéité illustrée en vue extérieure ;
- la figure 3 est une vue extérieure partielle selon la flèche F3 de la figure 2 ;
- la figure 4 est une vue similaire à celle de la figure 2 qui illustre les principaux composants de l'invention avec la cartouche d'étanchéité représentée en coupe ;
- la figure 5 est une vue partielle en section rabattue selon la ligne 5-5 de la figure 4 ; et
- la figures 6 et 7 et les figures 7 et 8 sont des vues similaires à celles des figures 4 et 5 qui illustrent respectivement un deuxième et un troisième mode de réalisation de l'invention.

Dans la description qui va suivre, des composants ou des éléments identiques, similaires ou analogues sont désignés par les mêmes chiffres de référence.

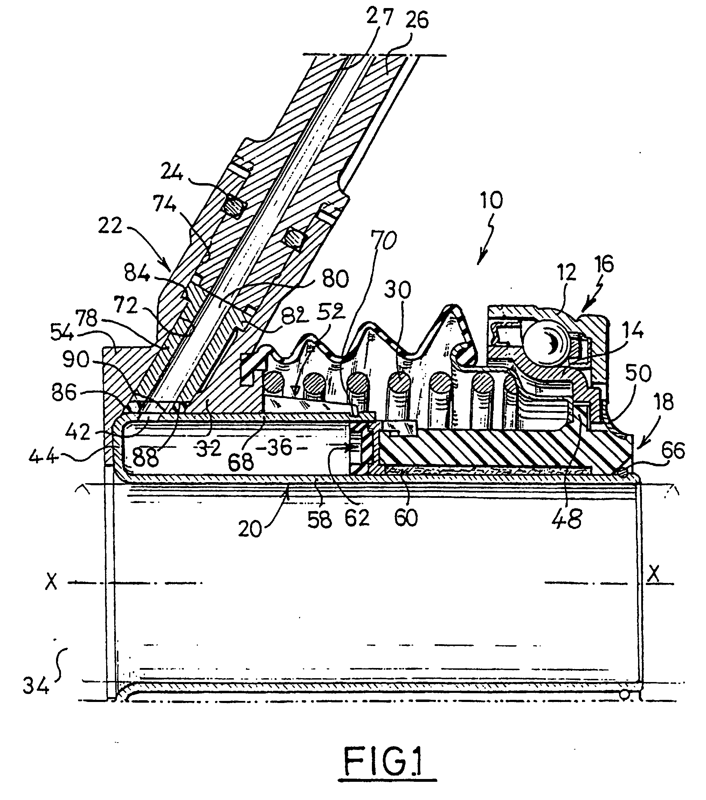

On a représenté à la figure 1 un dispositif 10 de débrayage à commande hydraulique pour un embrayage qui est ici un embrayage mécanique à diaphragme de véhicule automobile tel que décrit, dans son principe de fonctionnement, par exemple dans le document FR-A-2 730 532.

L'exemple de réalisation donné à la figure 1 correspond à la conception selon l'état de la technique constitué par la demande de brevet français n°98.07970 déposée le 19 juin 1998.

Le diaphragme de l'embrayage (non représenté) constitue donc le dispositif débrayeur de l'embrayage sur lequel est propre à agir un élément d'attaque 12 appartenant au dispositif de débrayage.

L'élément d'attaque 12 est constitué ici par la bague extérieure tournante d'un roulement à billes. Cette bague 12 est conformée pour agir ici en poussant sur l'extrémité interne des doigts que comporte le diaphragme.

La bague intérieure 14 du roulement est fixe en rotation, des billes étant interposées entre les bagues 12, 14. Les bagues 12, 14 sont ici en tôle emboutie.

Bien entendu, on peut inverser les structures, la bague extérieure du roulement étant fixe en rotation, tandis que la bague intérieure du roulement est alors tournante.

Pour plus de précisions, on se reportera par exemple au document FR-B-2 730 532 précité.

Ainsi, la bague tournante peut être bombée ou plate pour contact ponctuel avec les doigts du diaphragme.

L'ensemble bague tournante 12, bague fixe 14, appelé usuellement butée de débrayage 16, est destiné à agir ici en poussant sur le diaphragme.

Cette butée 16 est soumise à l'action d'un organe de commande, qui est ici un piston 18 monté mobile axialement le long d'un tube-guide 20 métallique, dit aussi tube de guidage. La butée 16 est propre à agir sur le dispositif débrayeur de l'embrayage et est portée par le piston 18.

Plus précisément, le dispositif hydraulique 10 de débrayage illustré à la figure 1 est un dispositif de débrayage à commande hydraulique du type concentrique.

Ce dispositif hydraulique de débrayage constitue le récepteur hydraulique d'une commande hydraulique d'embrayage. Le fluide de commande peut être de nature liquide ou consister en de l'air comprimé. Dans tous les cas, la commande est appelée commande hydraulique.

Ce dispositif comporte donc une entrée 22, ici de forme générale tubulaire inclinée par rapport à l'axe X-X de coulissement du piston 18, sur laquelle se branche, ici de manière brochable à l'aide d'une épingle élastique 24, une conduite 26 reliée à la sortie d'un maître cylindre (non représenté) commandé par la pédale de débrayage, ou en variante par un actionneur comportant un moteur électrique relié à un calculateur pilotant le moteur électrique selon des programmes prédéterminés pour réaliser l'opération de débrayage. Le maître cylindre comporte un piston et une chambre hydraulique de commande à volume variable. Il en est de même du récepteur, c'est-à-dire du dispositif de débrayage selon l'invention.

Ainsi qu'on le sait, lorsque, par exemple, le conducteur agit sur la pédale de débrayage, le piston du maître cylindre est déplacé axialement pour expulser le fluide de commande vers le récepteur et pressuriser la chambre de commande hydraulique de commande du récepteur.

Dans ce cas,. le volume de cette chambre augmente et la butée de débrayage 16 est, avec le piston 18, déplacée vers la droite comme visible à la figure 1. Dans ce cas, le diaphragme pivote et relâche son action sur le plateau de pression de l'embrayage pour libérer le disque de friction de l'embrayage.

Lorsque le conducteur relâche son action sur la pédale de débrayage, le piston du maître cylindre revient à sa position initiale et il en est de même du piston 18.

La chambre de commande est alors dépressurisée, le retour s'effectuant sur l'action du diaphragme repoussant la butée de débrayage 16 et le piston 18 vers la gauche de fa figure 1. L'embrayage est alors engagé.

Un ressort de précharge 30 est prévu pour maintenir la bague tournante 14 en appui permanent sur le diaphragme.

Le ressort 30 agit axialement entre le corps extérieur 32 et le piston 18. Ce ressort 30 est comprimé lorsque l'embrayage est engagé et est détendu lorsque l'embrayage est désengagé (figure 1).

Pour mémoire, on rappellera que lorsque l'embrayage est engagé, un couple est transmis du moteur du véhicule à l'arbre d'entrée 34 de la boîte de vitesses. Lorsque l'embrayage est désengagé, aucun couple n'est transmis, sachant que le disque de friction de l'embrayage est calé en rotation sur l'arbre 34 en étant destiné à être serré entre les plateaux de pression et de réaction de l'embrayage sous l'action du diaphragme. Tout ceci est bien connu et est décrit par exemple dans le document FR-A-2 730 532. Bien entendu, le dispositif de l'embrayage peut comporter des leviers de débrayage agissant sur des ressorts à boudin. Il peut consister en un faux diaphragme agissant sur une rondelle Belleville.

Ici, le fluide de commande est de l'huile, en variante, cela peut être de l'air comprimé, c'est donc par simplicité que le dispositif de débrayage, selon l'invention sera dénommé dispositif de débrayage à commande hydraulique.

Ce dispositif est du type concentrique car il est destiné à être traversé par un arbre, ici l'arbre 34 de la boîte de vitesses, représenté en pointillés à la figure 1.

Ce dispositif comporte donc un axe de symétrie axiale X-X, le tube-guide 20 entourant l'arbre d'entrée 34.

De manière précitée, ce dispositif comporte une chambre hydraulique de commande à volume variable délimité par le piston 18 monté mobile axialement le long du tube-guide 20.

La chambre est délimitée également par une cavité annulaire borgne 36 d'orientation axiale propre à être alimentée en fluide sous pression à partir de l'entrée tubulaire 22, qui débouche dans la cavité 36 au voisinage du fond de celle-ci. La cavité 36 sert donc de réceptacle au fluide commande et au piston 18, plus précisément au joint de celui-ci. Le piston 18 pénètre donc dans la cavité 36.

La cavité 36 est munie d'un orifice 42 et elle est délimitée à l'arrière par son fond 44 et est fermée de manière étanche à l'avant par le piston 18.

La cavité 36 est définie par le tube 20 pour réduire les coûts. Ce tube-guide 20 est solidaire du corps 32 de forme globalement tubulaire. Le tube 20 comporte un tube interne 58 relié par le fond 44, globalement d'orientation transversale, à un tube externe 68 plus court axialement que le tube 58. Le tube est par exemple obtenu par emboutissage profond à partir d'une pastille.

Le corps 32 est solidaire du tube-guide 20 et forme avec celui-ci la partie dite partie fixe du dispositif hydraulique de débrayage.

Le corps 32 est conformé pour être fixé sur une paroi fixe, qui est ici la paroi avant du carter de l'embrayage ou le carter de la boîte de vitesses du véhicule.

Par exemple, comme décrit dans le document FR-A-2 753 505, une semelle est rapportée sur la paroi fixe du véhicule et des moyens de montage du type baïonnette interviennent entre le corps extérieur 32 et la semelle.

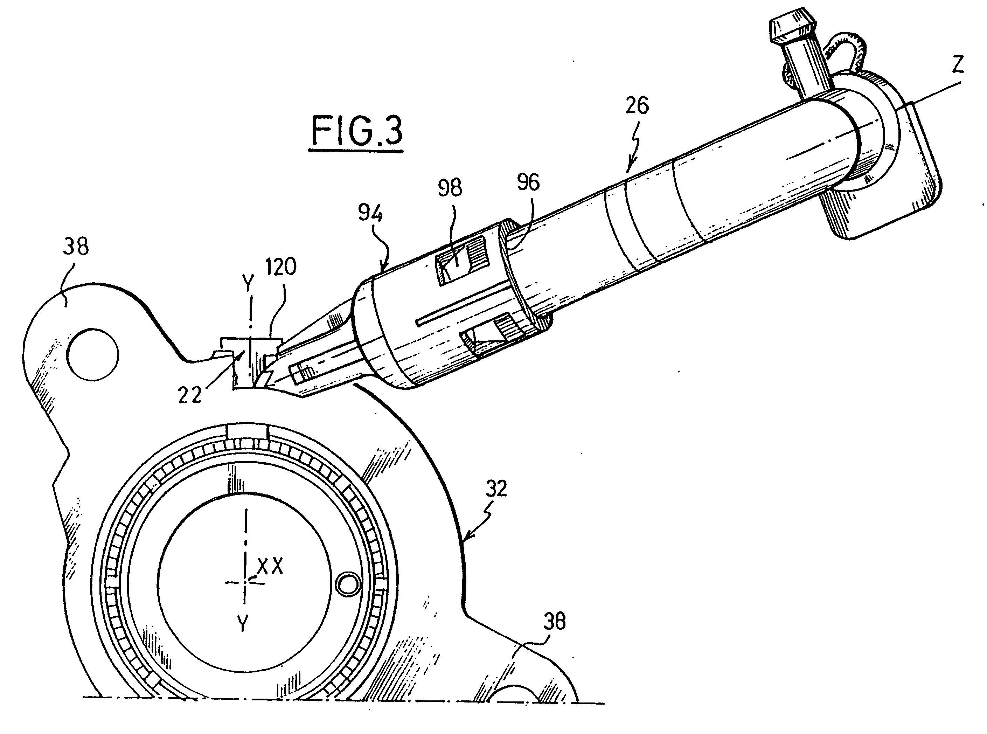

Ici, le corps 32 présente des oreilles 38 (voir figure 3) non visibles à la figure 1 pour sa fixation à l'aide de vis sur la paroi fixe du véhicule comme décrit dans le document FR-A-2 730 532.

D'une manière générale, le corps se monte directement ou indirectement sur une partie fixe du véhicule.

Le corps est en matière moulable, par exemple à base d'aluminium ou en matière plastique.

Ici, le corps 32 est en matière plastique moulable et l'entrée 22 est venue de moulage avec le corps 32.

Le corps 32 entoure le tube-guide 20 monté à l'intérieur du corps 32. Le corps 32 est donc un corps extérieur par rapport au tube-guide 20 formant tube intérieur. Le corps 32 et le tube 20 sont montés de manière concentrique en ayant le même axe X-X de symétrie axiale.

Plus précisément, le corps 32 entoure le tube externe 68 et il épouse la forme du fond 44 pour bloquer le tube 20 axialement dans un sens.

Le tube-guide 20 est le plus long axialement que le corps 32 et s'étend donc en saillie axiale par rapport au corps 32, ici extérieurement de diamètre étagé pour formation d'un épaulement d'appui 46 pour l'extrémité axiale arrière du ressort de précharge 30, dont l'autre extrémité (l'extrémité avant), s'appuie sur la face arrière d'une collerette 48, d'orientation globalement transversale, que présente en surépaisseur le piston 18 à son extrémité avant libre.

La face avant de la collerette 48 sert d'appui à la bague intérieure 14, plus précisément à un rebord radial interne que présente la bague 14 à sa périphérie interne. Un ressort à action axiale 50 maintient le rebord radial interne en contact avec la collerette 48. Ce ressort 50 prend appui sur un épaulement, non référencé, que présente le piston 18 à son extrémité avant. La bague 14, et donc le roulement ou butée 16, peut se déplacer radialement au contact de la collerette 48 sous le contrôle du ressort 50, ici en forme de rondelle Belleville.

La butée de débrayage 16 est donc autocentreuse. En variante, la butée est emmanchée à force sur le piston 18 et n'est donc pas autocentreuse. Dans tous les cas, la butée 1 est attelée axialement au piston 18.

Le ressort de précharge 30 entoure l'extrémité avant 52 de plus petit diamètre du corps 32, l'extrémité arrière 54 du corps 32 de plus grand diamètre présente les oreilles 38 de fixation à la paroi fixe du véhicule. L'entrée 22 est venue de moulage de l'extrémité arrière 54.

Un soufflet de protection est prévu. Ce soufflet 56 en matière élastomère, tel que du caoutchouc, entoure le ressort de précharge 30 et présente des bourrelets à chacune de ces extrémités et montés dans des gorges ménagées respectivement dans l'extrémité 54 et dans une douille 148 étagée solidaire du piston 18.

Le piston 18, de forme tubulaire réalisée en matière plastique par moulage, est guidé à coulissement axiale le long de la périphérie externe du tube-guide 20 ici métallique, plus précisément le long du tube interne 58 appartenant au tube-guide 20.

Ce piston 18 présente à sa périphérie interne une douille 60. La douille 60 est solidaire du piston 18 et est en contact intime à sa périphérie interne avec la périphérie externe du tube 58.

La matière de la douille 60 est choisie pour présenter de bonnes propriétés de coulissement.

Le piston 18 porte, à son extrémité libre avant, l'élément d'attaque 14 de manière précitée.

A son extrémité arrière, le piston 18 porte un joint dynamique d'étanchéité 62 fermant de manière étanche la cavité borgne 36 et donc la chambre à volume variable définie par le piston 20 et la cavité 36. Ce joint 62 présente des lèvres et est solidaire de la face arrière d'une pièce de liaison 64 en matière plastique.

Cette pièce 64 assure l'accrochage axial du joint à lèvres 62 sur le piston 18 ici par encliquetage et elle permet un mouvement axial du piston par rapport au joint 62.

Le tube intérieur 58 de guidage présente à son extrémité avant une gorge pour réception d'un circlips 66 formant butée axiale pour le piston 18 et permettant d'éviter au joint 62 de s'échapper de la cavité 36. En outre, cela permet de former avant montage sur véhicule un ensemble manipulable et transportable, le piston 18 ne pouvant s'échapper sous l'action du ressort de précharge 30.

Le soufflet 56 évite que la cavité borgne 36 ne soit polluée par des impuretés.

Le dispositif de commande hydraulique selon l'état de la technique est économique et léger. Il permet une standardisation de la cavité borgne 36 et l'adaptation du corps 32 aux différents montages sur véhicule. Cette solution permet de réduire le nombre de joints d'étanchéité.

Cela est dû au fait que la cavité borgne 36 est réalisée à la faveur du tube de guidage 20 ou tube-guide.

Le piston 18 avec son joint 62 et la pièce de liaison 64 se déplacent de manière étanche, grâce au joint 62, à l'intérieur de la cavité 36 alimentée en pression par l'orifice 42 implanté axialement entre le fond 44 et le joint 62 lorsque l'embrayage est engagé.

L'orifice 42, réalisé dans le tube externe 68 coaxial au tube interne 58, débouche dans le volume de réserve minimal de la chambre à volume variable formée dans la cavité borgne 36 et délimitée par le piston 18 mobile axialement par rapport au corps 32 et au tube de guidage fixe.

Le tube externe 68 présente à son extrémité avant une gorge 70 pour coopération avec l'extrémité avant du corps 32, plus précisément pour réception d'ergots ou crans appartenant à des pattes élastiques que présente l'extrémité 52.

Le blocage en rotation du tube 20 par rapport au corps 32 est réalisé à l'aide de crans, issus de la périphérie interne de l'extrémité avant du corps 32, lesdits crans pénétrant dans des empreintes creuses réalisées à l'extrémité avant du tube extérieur 68. Le tube externe présente donc des creux pour son blocage en rotation par rapport au corps. En variante les creux sont remplacés par des saillies.

Le tube 20 peut être monté par encliquetage dans le corps 32 du fait que l'extrémité avant du corps est de faible épaisseur.

Ainsi on enfile axialement le tube 20 dans le corps jusqu'à ce que les crans tombent dans les empreintes. Axialement le tube 20 est alors bloqué par les pattes élastiques de l'extrémité 52 engagées dans la gorge 70 du tube 68 et par le fond du corps 32 coopérant avec le fond 44 du tube 20.

A titre de variante, le corps extérieur 32 peut être surmoulé autour du tube-guide 20.

Dans le mode de réalisation selon l'état de la technique llustré à la figure 1, l'entrée 22 est une partie tubulaire éalisée venue de matière par moulage avec le corps extérieur 32.

L'entrée tubulaire 22 comporte un alésage intérieur étagé dont le tronçon radialement intérieur de petit diamètre 72 débouche radialement vers l'intérieur au droit de l'orifice l'alimentation 42 et se prolonge par le tronçon radialement extérieur de plus grand diamètre 74 qui reçoit la partie l'extrémité libre 76, de forme et de dimensions complémentaires, de la conduite 26.

Un élément tubulaire d'étanchéité 78 est monté dans le ronçon 72 de l'alésage de l'entrée 22.

L'élément tubulaire 78 comporte un canal coaxial 80 qui débouche ici à ses deux extrémités et il comporte à son extrémité radialement extérieure, une collerette 82 qui prend appui axialement contre l'épaulement 84 délimitant les deux tronçons 72 et 74 de l'alésage de l'entrée 22.

Une garniture annulaire d'étanchéité 86 entoure l'orifice d'alimentation 42 et elle est interposée axialement entre la face annulaire d'extrémité radialement intérieure 88 de l'élément tubulaire d'étanchéité 78 et la portion en vis-à-vis 90 de la surface périphérique externe du tube externe 68 qui entoure l'orifice 42. Une autre garniture d'étanchéité intervient entre l'extrémité de la conduite 26 et la collerette.

La garniture annulaire d'étanchéité 86 en matériau élastomère est montée comprimée entre les surfaces 88 et 90 de manière à assurer une bonne étanchéité entre le corps extérieur 32 et le tube externe 68 autour du trou 42, son serrage étant déterminé par la coopération des surfaces 82 et 84.

La garniture d'étanchéité 86 peut être un élément rapporté mis en place avant l'introduction de l'élément tubulaire 78 ou elle peut, à titre de variante, être réalisée venue de moulage selon la technique par injection bi-matières avec le corps en matière plastique de l'élément tubulaire d'étanchéité 78.

Il est possible de prévoir des moyens, non représentés, d'immobilisation en rotation autour de son axe de l'élément tubulaire d'étanchéité 78 par rapport à l'entrée tubulaire 22.

Le canal intérieur 80 de l'élément tubulaire 78 s'étend axialement dans le prolongement du canal intérieur 27 de la conduite 26 lorsque celle-ci est dans sa position montée illustrée à la figure 1.

Comme on peut le voir sur cette figure 1, l'ensemble de l'entrée 22 et de la conduite 26 est incliné axialement par rapport à l'axe X-X vers la droite, ce qui impose notamment de conformer le soufflet 56 avec une forme tronconique.

Selon la conception illustrée à la figure 1, à chaque fois que l'on désire modifier la position et l'orientation de l'entrée 22, et donc de la conduite 26, par rapport au corps extérieur 32, cela modifie la forme et la position de l'élément tubulaire 78, notamment au niveau de son extrémité radialement intérieure 88 dont l'inclinaison par rapport à l'axe de la pièce 78 dépend de l'inclinaison de l'entrée 22. De plus, le serrage de la garniture 86 n'est pas uniforme.

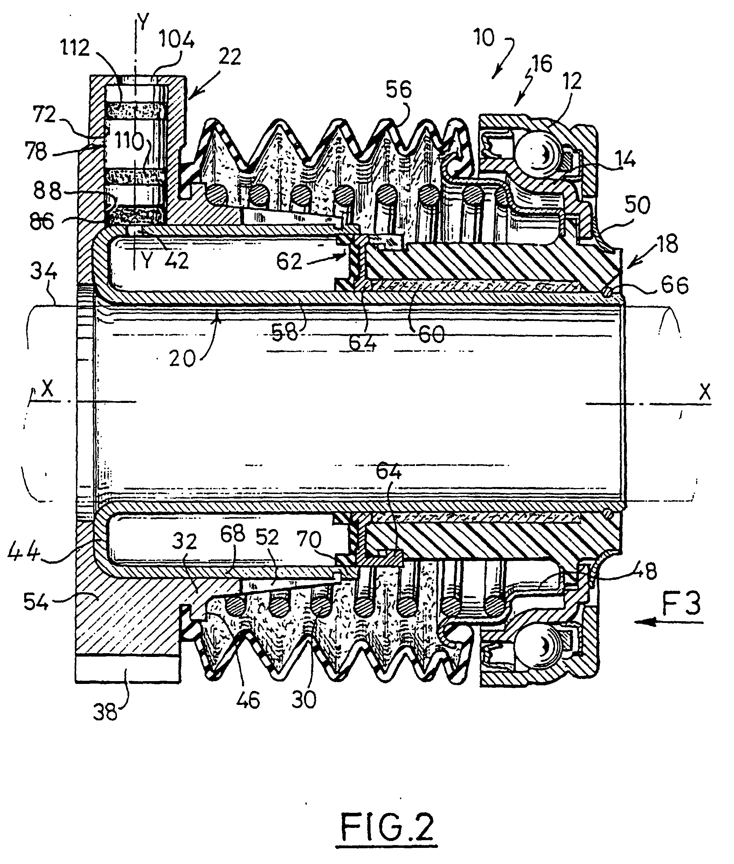

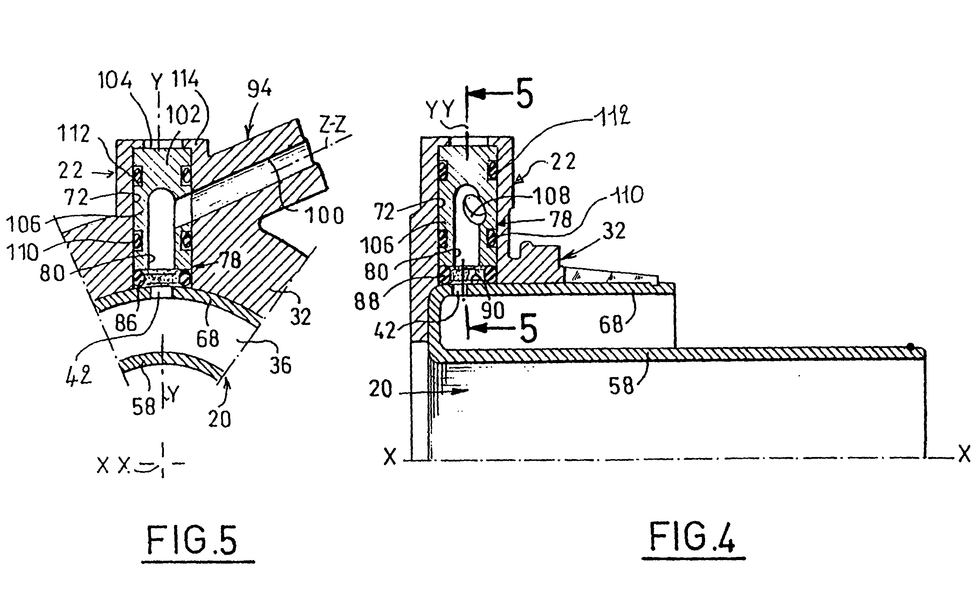

On décrira maintenant le premier mode de réalisation de l'invention, qui permet de remédier à ces inconvénients, en se reportant notamment aux figures 2 à 5.

Comme on peut le voir sur ces figures, l'entrée 22 est fonctionnellement et structurellement indépendante des moyens de fixation et de raccordement de la canalisation 26.

On voit ainsi que l'entrée 22 s'étend ici selon une direction radiale, c'est-à-dire que son axe Y-Y est perpendiculaire à l'axe X-X, tandis que le corps 32 comporte un embout 94 réalisé venu de matière par moulage permettant la fixation de la canalisation 26, qui est ici reçue dans un trou intérieur 96 de l'embout 94 auquel elle est fixée par des moyens 98 par emboîtement élastique.

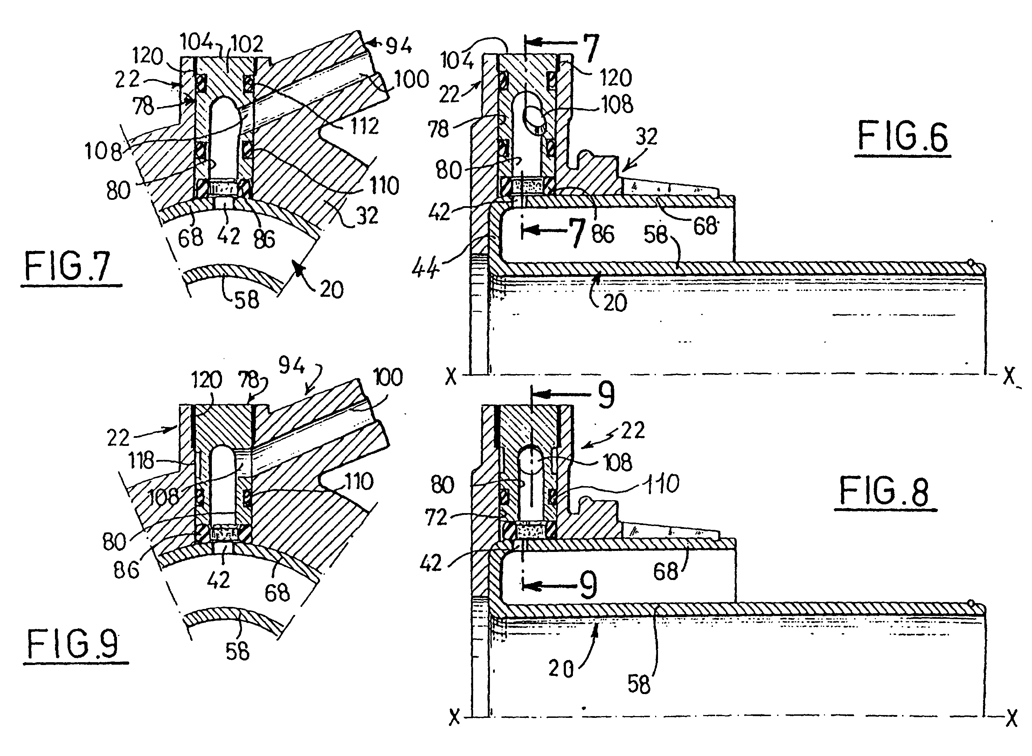

Comme on peut le voir aux figures 3 et 5, l'embout 94 s'étend transversalement en étant incliné par rapport aux axes X-X, Y-Y et son perçage axial 100, qui prolonge le canal 27 de la conduite de raccordement 26, débouche transversalement à l'intérieur de l'alésage 72 de l'entrée 22 selon la direction générale Z-Z de l'embout 94.

L'élément tubulaire d'étanchéité 78 est ici, conformément aux enseignements de l'invention, une cartouche borgne d'étanchéité, c'est-à-dire qu'il est fermé à son extrémité radialement extérieure par un fond 102 délimité par une paroi transversale en forme de disque 104.

Ainsi, le canal 80 est obturé à son extrémité radialement extérieure tout en débouchant radialement vers l'intérieur au droit de l'orifice d'alimentation 42 formé dans le tube externe 68 du tube de guidage 20. La cartouche d'étanchéité est ainsi de forme globalement tubulaire avec une paroi tubulaire 106.

Afin de mettre en communication les canaux 80 et 100, la paroi tubulaire 106 de la cartouche d'étanchéité comporte ici un trou ou passage 108 qui, lors du montage de la cartouche 78 dans son alésage 72, est disposé angulairement en regard du perçage 100.

La garniture radialement intérieure d'étanchéité 86 est, comme précédemment, montée comprimée axialement entre le bord annulaire d'extrémité radialement intérieure 88 de la cartouche 78 et la portion 90 du tube externe 58 qui entoure l'orifice d'alimentation 42. Une bonne étanchéité est ainsi réalisée avec une garniture 86 de forme simple et économique.

Afin d'assurer l'étanchéité de la cartouche 78 et du perçage 100, dans le mode de réalisation illustré aux figures 2 à 5, la cartouche d'étanchéité 78 porte deux joints annulaires toriques d'étanchéité radialement intérieur 110 et radialement extérieur 112.

Ainsi, le premier joint torique 110 est monté dans une gorge complémentaire formée dans la paroi périphérique de la cartouche d'étanchéité 78 et il est disposé entre le trou 108 et le perçage 100 d'une part, et l'extrémité radialement intérieure 88 d'autre part.

Le deuxième joint torique 112 est lui aussi monté dans une gorge radialement interne de la cartouche d'étanchéité 78 et il est disposé entre le trou 108 et le perçage 100 d'une part, et la face transversale d'extrémité radialement extérieure 104 de la cartouche 78 d'autre part.

Pour retenir la cartouche 78 en position montée dans l'alésage 72, dans laquelle elle comprime la garniture annulaire d'étanchéité 86, le premier mode de réalisation de l'invention illustré aux figures 2 à 5 propose de réaliser un épaulement de butée 114 venu de matière avec l'entrée 22.

L'épaulement de butée 114 s'étend ainsi radialement vers l'intérieur par rapport à l'alésage 72 et il est par exemple obtenu par fusion de la partie correspondante, radialement extérieure, de l'entrée 22 qui se présente initialement sous la forme d'un corps tubulaire permettant d'introduire axialement, radialement de l'extérieur vers l'intérieur, la cartouche d'étanchéité 78 en direction de l'axe X-X.

La cartouche 78 peut bien entendu comporter des moyens pour son indexation angulaire dans l'alésage 72 afin de garantir, lors de sa mise en place, le trou ou passage 108 est en alignement avec le perçage 100. Ces moyens peuvent être des formes complémentaires, tels qu'au moins une saillie d'une des pièces 22-78 pénétrant dans un creux de l'autre pièce 78-22, ou de simples indications visuelles.

Dans le deuxième mode de réalisation illustré aux figures 6 et 7, la conception générale du dispositif 10 et de sa cartouche d'étanchéité 78 sont identiques à ceux décrits précédemment en référence aux figures 2 à 5.

La cartouche d'étanchéité 78 est ici fixée axialement dans l'alésage 72 de l'entrée 22 par soudage étanche du tronçon d'extrémité radialement extérieur borgne 102 de la cartouche 78 à l'intérieur de la partie correspondante de l'alésage 72.

On crée ainsi une zone de soudage étanche 120 située au-dessus du joint torique d'étanchéité 112.

Le soudage peut être obtenu selon la technique de soudage à ultrasons ou selon toute autre technique de soudage avec apport indirect de chaleur telle que par exemple le soudage par rayonnement infrarouge, par friction, etc..

L'opération de soudage pour la réalisation de la zone de soudage étanche 120 s'effectue bien entendu en maintenant un effort axial, dirigé radialement en direction de l'axe X-X, sur la cartouche d'étanchéité 78, afin que, après l'opération de soudage, la garniture annulaire d'étanchéité 86 soit comprimée.

Dans le troisième mode de réalisation illustré aux figures 8 et 9, la cartouche d'étanchéité 78 est fixée comme précédemment par soudage, mais sa conception est légèrement différente.

En effet, elle ne porte qu'un seul joint torique d'étanchéité 110 agencé entre la garniture annulaire d'étanchéité 86 et le trou ou passage 108, compte tenu de la réalisation du soudage étanche 120.

Afin de s'affranchir du problème de l'orientation angulaire de la cartouche d'étanchéité 78 dans son alésage 72, la surface périphérique externe de la cartouche 78 comporte une gorge radiale interne 118 qui est formée au droit du passage 108 qui est ici d'orientation diamétrale.

Ainsi, le perçage 100 est toujours au droit de la gorge 118 qui le met en communication avec le passage 108, quelle que soit l'orientation angulaire de la cartouche 78.

L'invention n'est pas limitée aux modes de réalisation qui viennent d'être décrits.

La fixation et l'immobilisation de la cartouche d'étanchéité 78 dans l'alésage 72 de l'entrée tubulaire 22 peuvent notamment être assurées par d'autres moyens équivalents.

La cartouche 78 peut par exemple être fixée par vissage, par collage, par emmanchement à force, par frettage, par emboîtement élastique ou clipsage, au moyen d'une goupille transversale, etc., tous ces moyens intervenant directement entre la cartouche 78 et l'entrée 22 ou faisant appel à des éléments intermédiaires de fixation tels que des anneaux élastiques ou circlips.

La conception selon l'invention permet un démoulage aisé du corps 32, notamment de l'entrée 22, en en simplifiant les différentes étapes de fabrication, les différents alésages ou perçages étant réalisés venus de matière par moulage ou ultérieurement par des opérations de formage ou d'usinage.

A titre de variante non représentée, la cartouche 78 peut aussi être réalisée en plusieurs parties et la garniture annulaire d'étanchéité 86 peut, comme dans l'état de la technique, être réalisée selon la technique du moulage bi-matières avec la cartouche 78, ou avec une des parties de celle-ci.

Bien entendu, la garniture d'étanchéité 86 peut épouser la forme de la portion 90 du tube externe 68.

En variante, le tube-guide 20 est en plusieurs parties, le tube interne 58 étant par exemple plus épais que le tube externe 68. Le fond 44 peut alors être d'un seul tenant avec l'un ou l'autre des deux tubes 58 ou 68. Le tube 20 peut par exemple être obtenu par emboutissage profond.

Le fond 44 peut être plus épais que le reste du tube 20. Le tube externe 68 peut être plus épais que le tube interne 58. Pour plus de précisions on se reportera au document WO99/66226, le tube 20 étant avantageusement obtenu par une opération de filage au choc à partir d'une pastille métallique.

## Revendications

1. Dispositif (10) de débrayage à commande hydraulique pour embrayage pour action sur un dispositif débrayeur, comportant un corps extérieur (32) pour fixation du dispositif de débrayage sur une partie fixe, une cavité borgne de forme annulaire (36), d'orientation axiale, définie par un tube de guidage (20) délimité radialement vers l'extérieur par un tube externe (68), dont le corps extérieur (32) épouse la forme, et comportant un piston (18) pénétrant dans la cavité borgne (36) pour définir une chambre de commande à volume variable, dans lequel le tube externe (68) comporte un orifice (42) d'alimentation en fluide de la chambre qui est relié à une conduite (26) d'alimentation qui communique avec un alésage (72) du corps extérieur (32, 22), d'orientation globalement radiale et formé en regard de l'orifice (42) d'alimentation du tube externe (68), à travers un élément (78) tubulaire rapporté d'étanchéité monté dans l'alésage (72), **caractérisé en ce que** l'extrémité radialement extérieure (102) de l'élément tubulaire (78) est borgne, et **en ce que** la conduite d'alimentation (26) est reliée à un perçage (100) du corps extérieur (32, 94) qui débouche transversalement dans l'alésage (72) au droit d'un passage (108) formé dans la paroi (106) de l'élément tubulaire d'étanchéité (78).

2. Dispositif selon la revendication précédente, **caractérisé en ce que** l'élément tubulaire d'étanchéité (78) porte au moins un joint annulaire d'étanchéité (110, 112) qui coopère avec la paroi de l'alésage (72).

3. Dispositif selon la revendication précédente, **caractérisé en ce que** le joint annulaire d'étanchéité (110) est disposé entre ledit passage (108) et l'extrémité radialement intérieure (88) de l'élément tubulaire d'étanchéité (78).

4. Dispositif selon la revendication précédente, **caractérisé en ce que** l'élément tubulaire d'étanchéité (78) porte un second joint annulaire d'étanchéité (112) disposé entre ledit passage (108) et l'extrémité radialement extérieure (102, 104) de l'élément tubulaire d'étanchéité (78).

5. Dispositif selon la revendication 1, **caractérisé en ce qu'**une garniture annulaire d'étanchéité (86) est montée comprimée entre la face transversale annulaire d'extrémité radialement intérieure (88) de l'élément tubulaire d'étanchéité (78) et une partie en vis-à-vis de la paroi extérieure (90) du tube externe (68) qui entoure l'orifice d'alimentation.

6. Dispositif selon la revendication précédente, **caractérisé en ce que** la garniture annulaire d'étanchéité (86) est un élément rapporté entre la face transversale annulaire d'extrémité radialement intérieure (88) de l'élément tubulaire d'étanchéité (78) et la partie en vis-à-vis (90) de la paroi extérieure du tube externe (68).

7. Dispositif selon la revendication 5, **caractérisé en ce que** la garniture annulaire d'étanchéité (86) est réalisée par moulage en une seule pièce avec l'élément tubulaire d'étanchéité (78), notamment par injection bi-matières.

8. Dispositif selon la revendication 1, **caractérisé en ce que** ledit passage (108) est au moins un trou formé dans la paroi (106) de l'élément tubulaire d'étanchéité (78).

9. Dispositif selon la revendication précédente, **caractérisé en ce que** l'élément tubulaire d'étanchéité (78) comporte une gorge radiale interne (118) dans laquelle débouche ledit trou (108).

10. Dispositif selon la revendication 1, **caractérisé en ce que** l'élément tubulaire d'étanchéité (78) est immobilisé axialement dans l'alésage qui le reçoit (72) par des moyens de fixation agencés à l'extrémité radialement extérieure de l'alésage.

11. Dispositif selon la revendication 10, **caractérisé en ce que** lesdits moyens de fixation comportent un épaulement de butée (120) radialement interne de l'alésage qui s'étend en regard de la face transversale annulaire d'extrémité axiale radialement extérieure (104) de l'élément tubulaire d'étanchéité (78).

12. Dispositif selon la revendication précédente, **caractérisé en ce que** l'épaulement (120) est réalisé venu de matière avec le corps (32, 22), notamment par déformation de celui-ci après la mise en place de l'élément tubulaire d'étanchéité (78).

13. Dispositif selon la revendication 12, **caractérisé en ce que** l'épaulement de butée est un anneau rapporté à l'intérieur de l'alésage.

14. Dispositif selon la revendication 11, **caractérisé en ce que** l'élément tubulaire d'étanchéité (78) est immobilisé axialement dans l'alésage qui le reçoit par soudage étanche (120), notamment avec apport extérieur de chaleur, de son tronçon d'extrémité radialement extérieure dans la partie correspondante de l'alésage (72).

15. Dispositif selon la revendication 11, **caractérisé en ce que** l'élément tubulaire d'étanchéité (78) est immobilisé axialement dans l'alésage qui le reçoit par collage étanche de son tronçon d'extrémité radialement extérieure dans la partie correspondante de l'alésage.

16. Dispositif selon la revendication 11, **caractérisé en ce que** l'élément tubulaire d'étanchéité (78) est immobilisé axialement dans l'alésage qui le reçoit par vissage de son tronçon d'extrémité radialement extérieure dans la partie correspondante de l'alésage.

17. Dispositif selon la revendication 11, **caractérisé en ce que** l'élément tubulaire d'étanchéité (78) est immobilisé axialement dans l'alésage qui le reçoit par emmanchement à force.

18. Dispositif selon la revendication 11, **caractérisé en ce que** l'élément tubulaire d'étanchéité (78) est immobilisé axialement dans l'alésage qui le reçoit par des moyens complémentaires de fixation par emboîtement élastique.

19. Dispositif selon la revendication 11, **caractérisé en ce que** l'élément tubulaire d'étanchéité (78) est immobilisé axialement dans l'alésage qui le reçoit par des moyens complémentaires de fixation formant goupille.

20. Dispositif selon la revendication 1, **caractérisé en ce que** le corps (32) est une pièce moulée et **en ce que** l'élément tubulaire d'étanchéité (78) est une pièce moulée en matière plastique.

## Patentansprüche

1. Ausrückvorrichtung (10) mit hydraulischer Betätigung zur Einwirkung auf einen Ausrücker, umfassend einen Außenkörper (32) zur Befestigung der Ausrückvorrichtung auf einem ortsfesten Teil, einen axial ausgerichteten ringförmigen einseitig geschlossenen Hohlraum (36), der durch ein Führungsrohr (20) definiert ist, das radial nach außen durch ein äußeres Rohr (68) begrenzt wird, an dessen Form sich der Außenkörper (32) anpaßt, und umfassend einen Kolben (18), der in den einseitig geschlossenen Hohlraum (36) eindringt, um eine Betätigungskammer mit veränderlichem Volumen zu definieren, wobei das äußere Rohr (68) eine Einlaßöffnung (42) zur Befüllung der Kammer mit Fluid enthält, die mit einer Zuleitung (26) verbunden ist, die mit einer insgesamt radial ausgerichteten und gegenüber der Einlaßöffnung (42) des äußeren Rohrs (68) ausgebildeten Bohrung (72) des Außenkörpers (32, 22) über ein in die Bohrung (72) eingesetztes angefügtes rohrförmiges Dichtungselement (78) in Verbindung steht, **dadurch gekennzeichnet, daß** das radial äußere Ende (102) des rohrförmigen Dichtungselements (78) einseitig geschlossen ist, und daß die Zuleitung (26) mit einer Anschlußbohrung (100) des Außenkörpers (32, 94) verbunden ist, die quer in der Bohrung (72) in Höhe eines in der Wandung (106) des rohrförmigen Dichtungselements (78) ausgebildeten Durchgangs (108) mündet.

2. Vorrichtung nach dem vorangehenden Anspruch, **dadurch gekennzeichnet, daß** das rohrförmige Dichtungselement (78) wenigstens einen Dichtungsring (110, 112) trägt, der mit der Wandung der Bohrung (72) zusammenwirkt.

3. Vorrichtung nach dem vorangehenden Anspruch, **dadurch gekennzeichnet, daß** der Dichtungsring (110) zwischen dem besagten Durchgang (108) und dem radial inneren Ende (88) des rohrförmigen Dichtungselements (78) angeordnet ist.

4. Vorrichtung nach dem vorangehenden Anspruch, **dadurch gekennzeichnet, daß** das rohrförmige Dichtungselement (78) einen zweiten Dichtungsring (112) trägt, der zwischen dem besagten Durchgang (108) und dem radial äußeren Ende (102, 104) des rohrförmigen Dichtungselements (78) angeordnet ist.

5. Vorrichtung nach Anspruch 1, **dadurch gekennzeichnet, daß** eine Ringdichtung (86) zusammengedrückt zwischen der radial inneren ringförmigen Abschlußquerfläche (88) des rohrförmigen Dichtungselements (78) und einem gegenüberliegenden Teil der Außenwand (90) des äußeren Rohrs (68) eingesetzt ist, der die Öffnung umgibt.

6. Vorrichtung nach dem vorangehenden Anspruch, **dadurch gekennzeichnet, daß** die Ringdichtung (86) ein zwischen der radial inneren ringförmigen Querabschlußfläche (88) des rohrförmigen Dichtungselements (78) und dem gegenüberliegenden Teil (90) der Außenwand des äußeren Rohrs (68) angefügtes Element ist.

7. Vorrichtung nach Anspruch 5, **dadurch gekennzeichnet, daß** die Ringdichtung (86) als Formteil einstückig mit dem rohrförmigen Dichtungselement (78), insbesondere durch Sandwichpressen, ausgeführt ist.

8. Vorrichtung nach Anspruch 1, **dadurch gekennzeichnet, daß** der besagte Durchgang (108) wenigstens ein Loch ist, das in der Wandung (106) des rohrförmigen Dichtungselements (78) ausgebildet ist.

9. Vorrichtung nach dem vorangehenden Anspruch, **dadurch gekennzeichnet, daß** das rohrförmige Dichtungselement (78) eine innere radiale Auskehlung (118) enthält, in der das besagte Loch (108) mündet.

10. Vorrichtung nach Anspruch 1, **dadurch gekennzeichnet, daß** das rohrförmige Dichtungselement (78) in der Bohrung (72), die es aufnimmt, axial durch Befestigungsmittel gesichert ist, die am radial äußeren Ende der Bohrung angeordnet sind.

11. Vorrichtung nach Anspruch 10, **dadurch gekennzeichnet, daß** die besagten Befestigungsmittel eine radial innere Anschlagschulter (120) der Bohrung umfassen, die sich gegenüber der radial äußeren axialen ringförmigen Abschlußquerfläche (104) des rohrförmigen Dichtungselements (78) erstreckt.

12. Vorrichtung nach dem vorangehenden Anspruch, **dadurch gekennzeichnet, daß** die Schulter (120) einstückig mit dem Körper (32, 22), insbesondere durch dessen Verformung nach dem Einsetzen des rohrförmigen Dichtungselements (78) ausgeführt ist.

13. Vorrichtung nach Anspruch 12, **dadurch gekennzeichnet, daß** die Anschlagschulter ein im Innern der Bohrung angefügter Ring ist.

14. Vorrichtung nach Anspruch 11, **dadurch gekennzeichnet, daß** das rohrförmige Dichtungselement (78) in der Bohrung, die es aufnimmt, durch dichtes Verschweißen (120), insbesondere mit externer Wärmezufuhr, seines radial äußeren Abschlußteilstücks im entsprechenden Teil der Bohrung (72) axial gesichert ist.

15. Vorrichtung nach Anspruch 11, **dadurch gekennzeichnet, daß** das rohrförmige Dichtungselement (78) in der Bohrung, die es aufnimmt, durch dichtes Verkleben seines radial äußeren Abschlußteilstücks im entsprechenden Teil der Bohrung axial gesichert ist.

16. Vorrichtung nach Anspruch 11, **dadurch gekennzeichnet, daß** das rohrförmige Dichtungselement (78) in der Bohrung, die es aufnimmt, durch Verschrauben seines radial äußeren Abschlußteilstücks im entsprechenden Teil der Bohrung axial gesichert ist.

17. Vorrichtung nach Anspruch 11, **dadurch gekennzeichnet, daß** das rohrförmige Dichtungselement (78) in der Bohrung, die es aufnimmt, durch Einpressen axial gesichert ist.

18. Vorrichtung nach Anspruch 11, **dadurch gekennzeichnet, daß** das rohrförmige Dichtungselement (78) in der Bohrung, die es aufnimmt, durch formschlüssige Befestigungsmittel mittels elastischer Einpassung axial gesichert ist.

19. Vorrichtung nach Anspruch 11, **dadurch gekennzeichnet, daß** das rohrförmige Dichtungselement (78) in der Bohrung, die es aufnimmt, durch einen Stift bildende formschlüssige Befestigungsmittel axial gesichert ist.

20. Vorrichtung nach Anspruch 1, **dadurch gekennzeichnet, daß** der Körper (32) ein Formteil ist und daß das rohrförmige Dichtungselement (78) ein Formteil aus Kunststoff ist.

## Claims

1. A hydraulically controlled declutching device (10) for a clutch, for acting on a clutch disengagement means and comprising an external body (32) for fastening the declutching device on a fixed part, an axially oriented annular blind cavity (36) defined by a guide tube (20) which is delimited radially on the outside by an outer tube (68), the profile of which is matched by the external body (32), and further comprising a piston (18) which penetrates into the blind cavity (36) so as to define a varlable volume control chamber, wherein the outer tubs (68) includes an orifice (42) for feeding fluid to the chamber, which is connected to a feed duct (26) that is in communication with a bore (72) of the external body (32, 22), the orientation of which is generally radial and which is aligned with the feed orifice (42) of the outer tube (68), through a tubular element (78) sealingly attached to and mounted in the bore (72), **characterised in that** the radially outer end (102) of the tubular element (78) is blind, and **in that** the feed duct (20) is connected to a through hole (100) of the external body (32, 94) which is open transversely into the bore (72) in line with a passage (108) formed in the wall (106) of the tubular sealing element (78).

2. A device according to Claim 1, **characterised in that** the tubular sealing element (78) carries at least one annular seal (110, 112) which is in cooperation with the wall of the bore (72).

3. A device according to Claim 2, **characterised in that** the annular seal (110) is disposed between the said passage (108) and the radially inner end (88) of the tubular sealing element (78).

4. A device according to Claim 3, **characterised in that** the tubular sealing element (78) carries a second annular seal (112) disposed between the said passage (108) and the radially outer end (102, 104) of the tubular sealing element (78).

5. A device according to Claim 1, **characterised in that** an annular sealing gasket (86) is mounted in compression between the radially inner transverse annular end face (88) of the tubular sealing element (78) and a facing portion of the outer wall (90) of the outer tube (68) that surrounds the feed orifice.

6. A device according to Claim 5, **characterised in that** the annular sealing gasket (86) is an element which is fitted between the radially inner transverse annular end face (88) of the tubular sealing element (78) and the facing portion (90) of the outer wall of the outer tube (68).

7. A device according to Claim 5, **characterised in that** the annular sealing gasket (86) is made by moulding in one piece with the tubular sealing element (78), in particular by a two-material injection moulding technique.

8. A device according to Claim 1, **characterised in that** the said passage (108) is at least one hole formed in the wall (106) of the tubular sealing element (78).

9. A device according to Claim 8, **characterised in that** the tubular sealing element (78) has an internal radial groove (118) into which the said hole (108) is open.

10. A device according to Claim 1, **characterised in that** the tubular sealing element (78) is immobilised axially in the bore (72) which receives it, by fastening means which are arranged at the radially outer end of the bore.

11. A device according to Claim 10, **characterised in that** the said fastening means comprise a radial abutment shoulder (120) formed within the bore, which extends facing the radially outer annular transverse axial end face (104) of the tubular sealing element (78).

12. A device according to Claim 11, **characterised in that** the shoulder (120) is formed integrally with the body (32, 22), in particular by deformation of the latter after the tubular sealing element (78) has been fitted in place.

13. A device according to Claim 12, **characterised in that** the abutment shoulder is an annular ring attached within the bore.

14. A device according to Claim 11, **characterised in that** the tubular sealing element (78) is immobilised axially, in the bore which receives it, by sealed welding (120), in particular with external application of heat from its radially outer end portion into the corresponding portion of the bore (72).

15. A device according to Claim 11, **characterised in that** the tubular sealing element (78) is immobilised axially, in the bore which receives it, by sealed adhesive bonding of its radially outer end portion in the corresponding portion of the bore.

16. A device according to Claim 11, **characterised in that** the tubular sealing element (78) is immobilised axially, in the bore that receives it, by screw-fastening of its radially outer end portion in the corresponding portion of the bore.

17. A device according to Claim 11, **characterised in that** the tubular sealing element (78) is immobilised axially by force-fitting in the bore that receives it.

18. A device according to Claim 11, **characterised in that** the tubular sealing element (78) is immobilised axially, in the bore that receives it, by complementary fastening means with elastic mating engagement.

19. A device according to Claim 11, **characterised in that** the tubular sealing element (78) is immobilised axially, in the bore that receives it, by complementary fastening means defining a cotter pin.

20. A device according to Claim 1, **characterised in that** the body (32) is a moulded component, and **in that** the tubular sealing element (78) is a plastics moulding.
